# EUROPEAN PATENT APPLICATION

(11) **EP 4 131 561 A1**
(43) Date of publication of application: **08.02.2023**
(21) Application number: 20928244.1
(22) Date of filing: 25.11.2020
(51) Int. Cl.: H01M 10/44, H01M 50/20

(54) **POWER SUPPLY DEVICE, VEHICLE PROVIDED WITH SAME, AND POWER STORAGE DEVICE**

(30) Priority: 31.03.2020 JP 2020064059
(71) Applicant: SANYO Electric Co., Ltd., Daito-shi Osaka 574-8534 (JP)
(72) Inventor: FUKUDA, Masaki, Osaka-shi, Osaka 540-6207 (JP); SATO, Wataru, Osaka-shi, Osaka 540-6207 (JP); UEMURA, Yasuaki, Osaka-shi, Osaka 540-6207 (JP); MORISHITA, Taijyu, Osaka-shi, Osaka 540-6207 (JP)
(74) Representative: Novagraaf International SA
(86) International application number: PCT/JP2020/043710
(87) International publication number: WO 2021/199493

(57) **Abstract**

Power supply device (100) includes battery stack (10) in which a plurality of prismatic battery cells (1) are stacked, end plate (20) having a rectangular shape in plan view and having a pressing surface that covers an end surface of battery stack (10), and fastening member (15) that fastens battery stack (10). End plate (20) has, on a pressing surface, flat pressing regions (25) respectively formed on end edge sides in the up-down direction, and bead region (26) formed on the middle side in the up-down direction and bent in a shape protruding toward the back surface side of the pressing surface. Thus, strength can be improved by changing a shape in which bead region (26) is formed in the middle while pressing regions (25) that presses battery stack (10) remains on end plate (20), which enables end plate (20) having high strength to be provided at low cost.

## Description

### TECHNICAL FIELD

The present disclosure relates to a power supply device, a vehicle provided with the same, and a power storage device.

### BACKGROUND ART

A power supply device such as a battery module or a battery pack including a plurality of battery cells is used as a power supply for vehicle such as a hybrid automobile or an electric automobile, and a power supply of a power storage system for factory, home, and others.

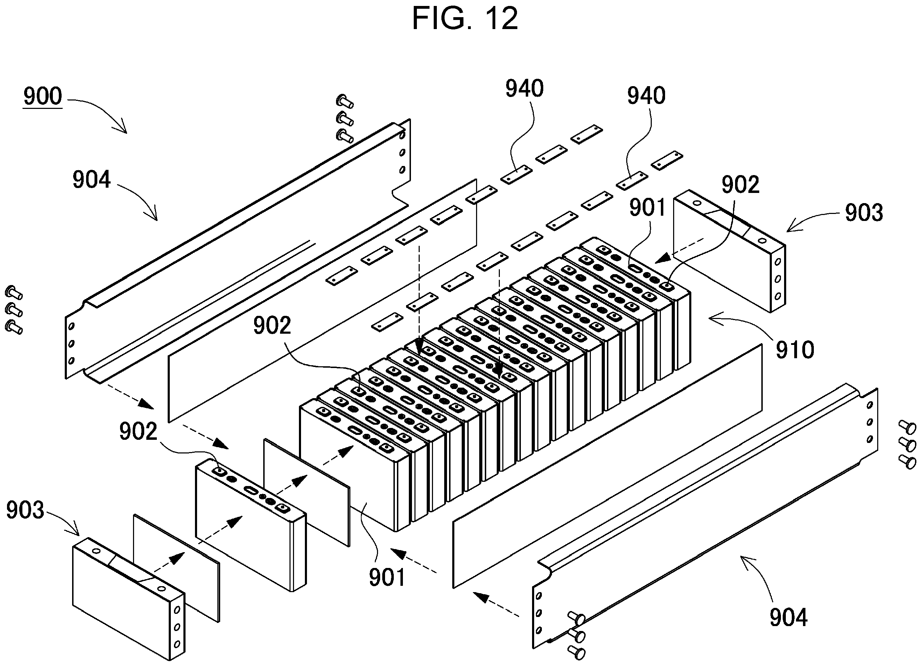

In such a power supply device, a plurality of chargeable and rechargeable battery cells are stacked. For example, as shown in a schematic perspective view in Fig. 12, power supply device 900 is configured by stacking battery cells 901 each formed as prismatic parallelepiped outer covering can to obtain battery stack 910, disposing end plates 903 respectively on both end surfaces of battery stack 910, and fastening end plates 903 to each other with bind bars 904. Battery cell 901 having a square shape is provided with, on the upper surface, positive and negative electrode terminals 902 separated from each other. Electrode terminals 902 of adjacent battery cells 901 are connected by bus bar 940.

In this structure in which the battery stack is pressed and fastened by the end plates, the end plates need to have sufficient strength. Generally, increasing the strength of the end plates increases the cost. For example, the end plates using two sheet metals for securing strength are expensive. In addition, in the case where a mechanical clinch is used for fixing the end plates and the bind bars to each other (see Patent Literature 1), the mechanical clinch has a large equipment size, and interference at the time of processing needs to be avoided on the power supply device, and as a result, a problem has occurred that the size of the power supply device increases.

### Citation List

### Patent Literature

PTL 1: Unexamined Japanese Patent Publication No. 2013-69657

### SUMMARY OF THE INVENTION

### Technical problem

An object of one aspect of the present invention is to provide a power supply device that achieves cost reduction while maintaining strength of an end plate, a vehicle provided with the power supply device, and a power storage device.

### Solution to problem

A power supply device according to an aspect of the present invention includes: a battery stack including battery cells of a prismatic shape stacked in plural numbers; an end plate of a rectangular shape in plan view, the end plate including a pressing surface covering an end surface of the battery stack; and a fastening member that fastens the battery stack, in which the end plate includes, on the pressing surface, pressing regions of a flat shape respectively disposed closer to end edge in the vertical direction, and a bead region disposed closer to the middle in the vertical direction and bent into a shape protruding toward a back surface side of the pressing surface.

### Advantageous effect of invention

According to the power supply device according to one aspect of the present invention, because the strength can be improved by changing a shape in which the bead region is disposed in the middle while the pressing region that presses the battery stack remains on the end plate, the end plate having high strength can be provided at low cost.

### BRIEF DESCRIPTION OF THE DRAWINGS

Fig. 1 is a perspective view showing a power supply device according to a first exemplary embodiment of the present invention.
Fig. 2 is an exploded perspective view of the power supply device shown in Fig. 1.
Fig. 3 is an enlarged perspective view of a portion of an end plate of the power supply device in Fig. 1.
Fig. 4 is a longitudinal sectional view of the end plate of the power supply device in Fig. 1.
Fig. 5A is a schematic longitudinal sectional view of the end plate in which a bead region is a curved surface shape, and Fig. 5B is a schematic cross-sectional view of the end plate in which the bead region is a U shape.
Fig. 6A is a schematic longitudinal sectional view taken along a line VIA-VIA in Fig. 3, and Fig. 6B is a schematic longitudinal sectional view taken along a line VIB-VIB in Fig. 3.
Fig. 7 is a longitudinal sectional view of an end plate of a power supply device according to a second exemplary embodiment.
Fig. 8 is a longitudinal sectional view of an end plate of a power supply device according to a third exemplary embodiment.
Fig. 9 is a block diagram showing an example in which the power supply device is mounted on a hybrid automobile that travels by an engine and a motor.
Fig. 10 is a block diagram showing an example in which the power supply device is mounted on an electric automobile that travels only by a motor.
Fig. 11 is a block diagram showing an example of applying the power supply device to a power supply device for power storage.
Fig. 12 is an exploded perspective view showing the conventional power supply device.
Fig. 13 is an exploded perspective view of a portion of an end plate of a power supply device according to a fourth exemplary embodiment.

### DESCRIPTION OF EMBODIMENTS

Exemplary embodiments of the present invention may be specified by the following configurations.

In the power supply device according to one exemplary embodiment of the present invention, in addition to the above configuration, the end plate is provided with side walls respectively on both side surfaces of the pressing surface, and the side walls each include fixing regions configured to be fixed with the fastening member at positions corresponding to the pressing regions closer to end edge in the vertical direction, the side wall being connected to a protruding shape of the bead region at a central portion in the vertical direction. With the above configuration, the strength can be secured by making the central portion continuous with the protruding shape of the bead region while securing the fixing region where the end plate is coupled to the fastening members on both side surfaces of the end plate.

In the power supply device according to another exemplary embodiment of the present invention, in addition to any of the above configurations, in the end plate, the protruding shape of the bead region is a curved shape. With the above configuration, concentration of stress can be avoided more as compared to a configuration in which the bead region is bent in a U shape, and the strength of the end plate can be improved by dispersing the stress.

In addition, in the power supply device according to another exemplary embodiment of the present invention, in addition to any of the above configurations, the side wall of the end plate is continuous in a curved surface at a central portion with the bead region. With the above configuration, the strength can be secured by making the central portion continuous with the protruding portion of the bead region while securing the region where the end plate is coupled to the fastening member on the side wall of the end plate.

Further, in the power supply device according to another exemplary embodiment of the present invention, in addition to any one of the above configurations, in the end plate, the protruding shape of the bead region is protruded steeply at left and right central portions in vertical sectional view and is inclined gently toward both sides. With the above configuration, the central portion of the end plate is brought close to the protruding strip to improve the strength, and meanwhile, the fixing portion with the fastening member is secured by the side wall of the end plate at the end part.

Still further, in the power supply device according to another exemplary embodiment of the present invention, in addition to any of the above configurations, the end plate is one metal sheet bent by press working. With the above configuration, the end plate can be reduced in cost and weight.

Furthermore, in the power supply device according to another exemplary embodiment of the present invention, in addition to any of the configurations described above, in cross-sectional view, the end plate includes the pressing regions respectively disposed in upper and lower parts of the end plate and whose heights sum up to a height of the bead region disposed in a middle. With the above configuration, both pressing force and rigidity of the end plate can be achieved in a well-balanced manner.

Furthermore, in the power supply device according to another exemplary embodiment of the present invention, in addition to any of the above configurations, the end plate is fixed to the fastening member by welding or caulking. With the above configuration, the strength can be secured while securing the fixing portion between the end plate and the fastening member.

An electrically-driven vehicle according to another exemplary embodiment of the present invention includes any of the above power supply devices, a motor for driving supplied with electric power from the power supply device, a vehicle body equipped with the power supply device and the motor, and wheels driven by the motor to cause the vehicle body to travel.

Further, a power storage device according to another exemplary embodiment of the present invention includes any of the above power supply devices and a power supply controller that controls charging and discharging of the power supply device, the power supply controller enabling charging of the battery cells with electric power from outside and controlling charging to be performed on the battery cells.

Hereinafter, exemplary embodiments of the present invention are described with reference to the drawings. However, the exemplary embodiments described below are examples for embodying the technical idea of the present invention, and the present invention is not limited to the following. In the present description, members indicated in the claims are not limited to the members of the exemplary embodiments. In particular, dimensions, materials, shapes, and relative arrangement of the constituent members described in the exemplary embodiments are not intended to limit the scope of the present invention only thereto unless otherwise specified and are merely illustrative examples. Note that sizes, positional relationships, and others of the members shown in the drawings may be exaggerated to clarity the description. In the following description, the same names and reference marks indicate the same or similar members, and detailed descriptions are appropriately omitted. The elements constituting the present invention may be configured such that the plurality of elements are constituted of the same members to form one member that functions as a plurality of elements, or conversely, the function of one member can be shared and achieved by a plurality of members. Contents described in some examples or exemplary embodiments can be used, for example, in other examples or exemplary embodiments.

The power supply device according to the exemplary embodiments can be used in various applications including a power supply that is mounted in an electrically-driven vehicle such as a hybrid automobile and an electric automobile to supply electric power to a drive motor, a power supply that stores power generated by natural energy such as photovoltaic power generation and wind power generation, and a power supply for storing late-night power, and in particular, the power supply device can be used as a power supply suitable for high power and high current applications. In the following example, the exemplary embodiments applied to a power supply device for driving an electrically-driven vehicle is described.

### [First exemplary embodiment]

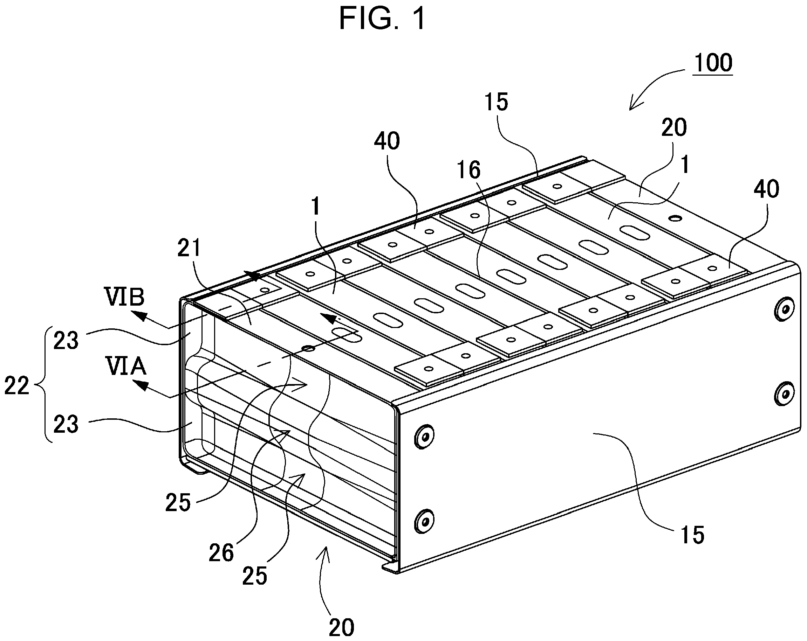

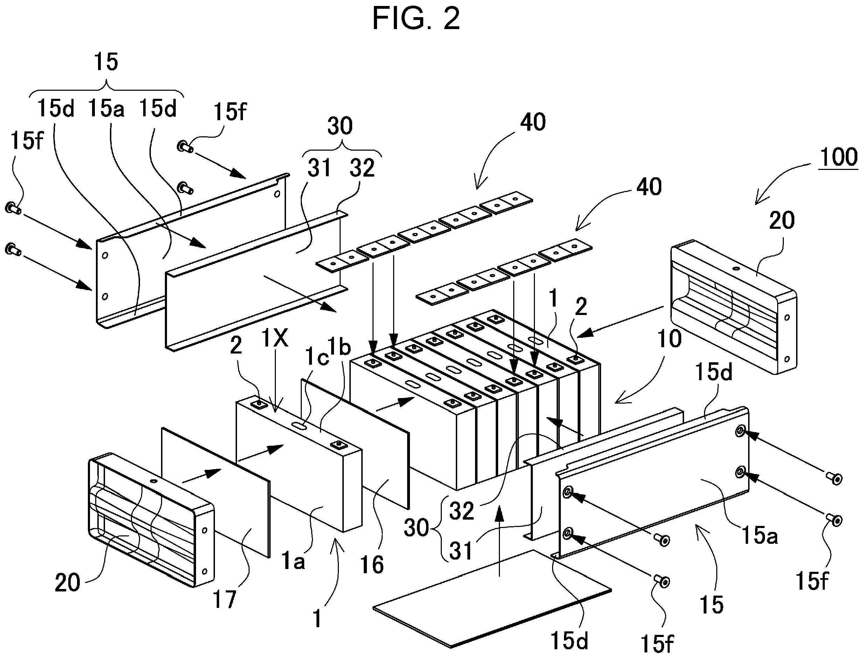

Power supply device 100 according to a first exemplary embodiment of the present invention is shown in Figs. 1 to 2. In these drawings, Fig. 1 is a perspective view of power supply device 100 according to the first exemplary embodiment, and Fig. 2 is an exploded perspective view of power supply device 100 shown in Fig. 1. Power supply device 100 shown in these drawings includes battery stack 10 in which a plurality of battery cells 1 are stacked with insulating spacer 16 interposed therebetween, a pair of end plates 20 covering both end surfaces of battery stack 10, a plurality of fastening members 15 for fastening end plates 20 to each other, and bus bar 40 disposed on the upper surface of battery stack 10. Fastening members 15 are each formed into a plate shape extending in a stacking direction of the plurality of battery cells 1. Fastening members 15 are respectively disposed on opposite side surfaces of battery stack 10 and fasten end plates 20 to each other.

### (Battery stack 10)

As shown in Fig. 2, battery stack 10 includes the plurality of battery cells 1 each including positive and negative electrode terminals 2, and bus bars 40 connected to electrode terminals 2 of the plurality of battery cells 1 to connect the plurality of battery cells 1 in parallel and in series. The plurality of battery cells 1 are connected in parallel or in series through bus bars 40. Battery cell 1 is a chargeable and dischargeable secondary battery. In power supply device 100, the plurality of battery cells 1 are connected in parallel to constitute a parallel battery group, and a plurality of the parallel battery groups are connected in series to allow a large number of battery cells 1 to be connected in parallel and in series. In power supply device 100 shown in Fig. 2, the plurality of battery cells 1 are stacked to form battery stack 10. A pair of end plates 20 are disposed on both end surfaces of battery stack 10. End parts of fastening members 15 are respectively fixed to end plates 20 to fix stacked battery cells 1 in a pressurized state.

### (Battery cell 1)

As shown in Fig. 2, battery cell 1 is a prismatic parallelepiped battery whose width is larger than the thickness, in other words, whose thickness smaller than the width, and the battery cells 1 are stacked in the thickness to form battery stack 10. Battery cell 1 can be, for example, a lithium ion secondary battery. The battery cell can be any chargeable secondary battery such as a nickel metal hydride battery or a nickel cadmium battery. Battery cell 1 houses positive and negative electrode plates in outer covering can 1a having a sealed structure together with an electrolyte solution. Outer covering can 1a is obtained by press-molding a metal sheet such as aluminum or an aluminum alloy into a prismatic shape, and hermetically sealing an opening portion with sealing plate 1b. Sealing plate 1b is made of aluminum or aluminum alloy similarly as prismatic parallelepiped outer covering can 1a, and positive and negative electrode terminals 2 are respectively fixed to both end parts of sealing plate 1b. Sealing plate 1b is provided with, between positive and negative electrode terminals 2, gas discharge valve 1c, which is a safety valve that opens in response to an internal pressure change of each of battery cells 1.

The plurality of battery cells 1 are stacked to allow the thickness of each battery cell 1 to be aligned with the stacking direction to constitute battery stack 10. At this time, by providing more stacks than usual, output power of battery stack 10 can be increased. In this case, battery stack 10 becomes long and extended in the stacking direction. Battery cells 1 are disposed to allow terminal surfaces 1X each provided with positive and negative electrode terminals 2 to be on the same plane, and the plurality of battery cells 1 are stacked to constitute battery stack 10. The upper surface of battery stack 10 is a surface provided with gas discharge valves 1c of the plurality of battery cells 1.

### (Electrode terminal 2)

In battery cell 1, as shown in Fig. 2 and the like, sealing plate 1b being a top surface serves as terminal surface 1X, and positive and negative electrode terminals 2 are fixed to both ends of terminal surface 1X. Electrode terminal 2 includes a protrusion having a circular columnar shape. However, the protrusion is not necessarily in a circular columnar shape and may be in a polygonal columnar shape or an elliptic columnar shape.

Positive and negative electrode terminals 2 fixed to sealing plate 1b of battery cell 1 are positioned where the positive electrode and the negative electrode are bilaterally symmetrical. This enables adjacent battery cells 1 to be connected in series by stacking battery cells 1 in an alternately and horizontally reversed manner and connecting electrode terminals 2 of the positive electrode and the negative electrode that are adjacent and close to each other by bus bars 40, as shown in Fig. 2. Note that the present invention does not specify the number and the connection state of the battery cells constituting the battery stack. The number and the connection state of the battery cells constituting the battery stack may be modified in various manners, inclusive of other exemplary embodiments described later.

The plurality of battery cells 1 are stacked to allow the thickness of each battery cell 1 to be aligned with the stacking direction to constitute battery stack 10. In battery stack 10, the plurality of battery cells 1 are stacked to allow terminal surfaces 1X provided with positive and negative electrode terminals 2, or sealing plates 1b in Fig. 2, to be flush with each other. In battery stack 10, adjacent electrode terminals 2 are coupled together with bus bars 40 made of metal sheets to connect battery cells 1 in series.

### (Bus bar 40)

Both ends of bus bars 40 are respectively connected to positive and negative electrode terminals 2 so that bus bars 40 connect battery cells 1 in series or in parallel. In power supply device 100, output voltage can be increased by connecting battery cells 1 in series, and output voltage and output current can be increased by connecting battery cells 1 in parallel and in series.

### (Insulating spacer 16)

In battery stack 10, insulating spacer 16 is interposed between battery cells 1 stacked adjacent to each other. Insulating spacer 16 is made of insulating material such as resin in the form of a thin plate or sheet. Insulating spacer 16 is formed to have a plate shape that is substantially equal in size to the opposing surface of battery cell 1. This insulating spacer 16 can be stacked between battery cells 1 adjacent to each other to insulate adjacent battery cells 1 from each other. As a spacer disposed between the adjacent battery cells, a spacer can be used which has a shape that allows a flow path through which a cooling gas flows to be formed between the battery cell and the spacer. In addition, the surface of the battery cell can be covered with an insulating material. For example, the surface of the outer covering can except for the electrode terminal portion of the battery cell may be covered with a shrink film such as a polyethylene terephthalate (PET) resin.

Further, power supply device 100 shown in Fig. 2 includes end plates 20 respectively disposed on both end surfaces of battery stack 10. Between each of end plates 20 and battery stack 10, end surface spacer 17 may be interposed to insulate the two. End surface spacer 17 can also be formed in the form of a thin plate or sheet with insulating material such as resin.

In power supply device 100 according to the first exemplary embodiment, in battery stack 10 in which the plurality of battery cells 1 are stacked on each other, electrode terminals 2 of the plurality of battery cells 1 adjacent to each other are connected by bus bars 40 to connect the plurality of battery cells 1 in parallel and in series.

As shown in Fig. 2, end plates 20 are respectively disposed at both ends of battery stack 10 and fastened with each other through the pair of right and left fastening members 15 that are respectively disposed along both side surfaces of battery stack 10. End plates 20 are respectively disposed on the outer sides of end surface spacers 17, that is, both ends in the stacking direction of battery cells 1 of battery stack 10, and clamp battery stack 10 from both ends.

### (Fastening member 15)

Each of fastening member 15 is fixed at both ends to end plates 20 respectively disposed on both end surfaces of battery stack 10. End plates 20 are fixed by the plurality of fastening members 15 to fasten battery stack 10 in the stacking direction. As shown in Fig. 2 and the like, fastening members 15 are each made of metal having a predetermined width and a predetermined thickness along the side surface of battery stack 10, and are disposed facing each other on both side surfaces of battery stack 10. A metal sheet of iron or the like, preferably a steel sheet, can be used as fastening member 15. Fastening member 15 made of a metal sheet is bent by press molding or the like to be formed into a predetermined shape.

Fastening member 15 includes plate-shaped fastening main surface 15a whose upper and lower parts are bent in a U-shape to form bent pieces 15d. Upper and lower bent pieces 15d respectively cover upper and lower surfaces of battery stack 10 from the corners on the left and right side surfaces of battery stack 10.

Power supply device 100 having a large number of battery cells 1 stacked is configured such that the plurality of battery cells 1 are constrained by connecting end plates 20 respectively disposed at both ends of battery stack 10 including the plurality of battery cells 1 using fastening members 15. By constraining the plurality of battery cells 1 through end plates 20 and fastening members 15 that have high rigidity, malfunction or other faults caused by swelling, deformation, relative displacement, or vibration of battery cells 1 due to charging and discharging or degradation can be suppressed.

### (Insulating sheet 30)

Insulating sheet 30 is interposed between fastening member 15 and battery stack 10. Insulating sheet 30 is made of material having an insulating property, such as resin, and insulates metal fastening member 15 from battery cell 1. Insulating sheet 30 shown in Fig. 2 and the like is constituted of flat plate 31 for covering the side surface of battery stack 10, and bent covers 32 respectively provided on an upper part and a lower part of flat plate 31. Bent covers 32 are formed by being bent in a U shape from flat plate 31 so as to respectively cover bent pieces 15d of fastening member 15, and then by further being folded back. As a result, bent pieces 15d are covered with the insulating bent covers from the upper surface to the side surface and the lower surface, which can avoid unintended conduction between battery cell 1 and fastening member 15.

Bent pieces 15d press the upper surface and the lower surface of battery cells 1 of battery stack 10 through bent covers 32. As a result, each battery cell 1 is pressed by bent pieces 15d from the upper and lower sides to be held in the height direction, and even when vibration, impact, or the like is applied to battery stack 10, each battery cell 1 can be maintained so as not to be displaced in the vertical direction.

Note that the insulating sheet is unnecessary in the case where the battery stack or the surface of the battery stack is insulated, for example, in the case where the battery cell is housed in an insulating case or covered with a heat-shrinkable film made of resin, or in the case where an insulating paint or coating is applied to the surface of the fastening member, or in the case where the fastening member is made of an insulating material. In addition, regarding insulating sheet 30, bent cover 32 may be provided only near the upper end in the case where insulation from bent piece 15d of fastening member 15 does not need to be taken into consideration near the lower surface of battery stack 10. This corresponds to, for example, the case where the battery cell is covered with a heat-shrinkable film.

### (End plate 20)

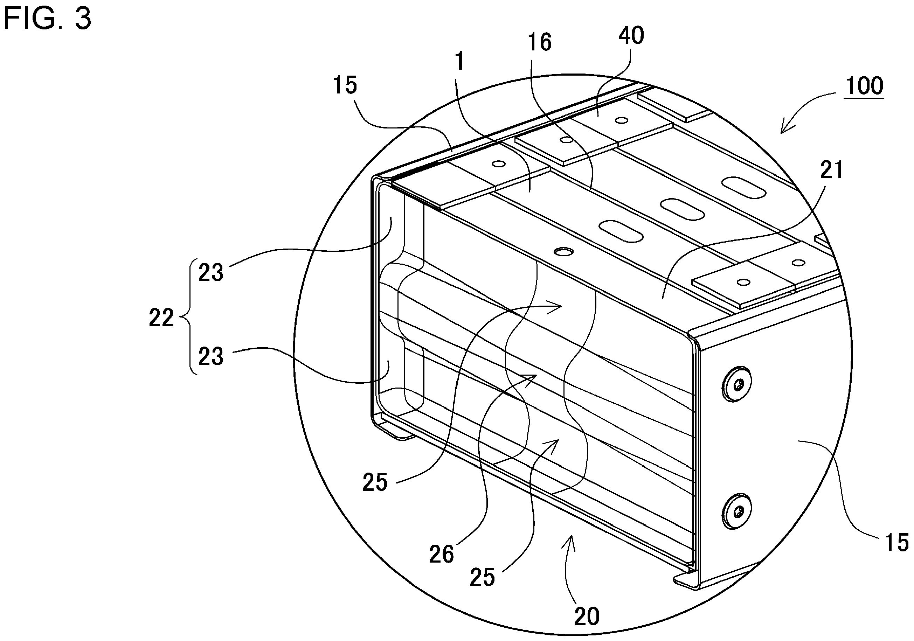

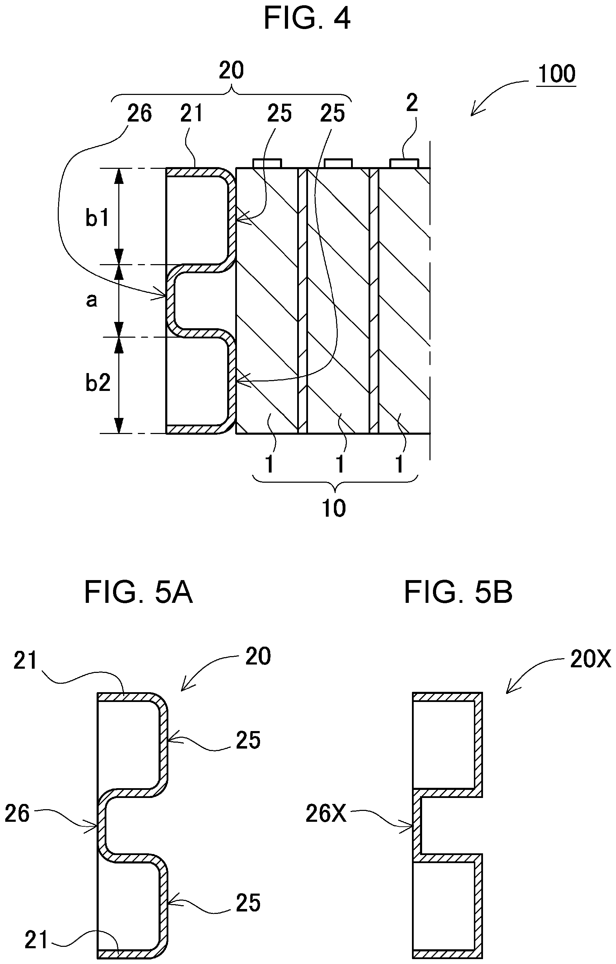

Details of end plate 20 are described with reference to Figs. 3 to 4. In these drawings, Fig. 3 is an enlarged perspective view of a portion of end plate 20 of power supply device 100 in Fig. 1, and Fig. 4 is a longitudinal sectional view of a portion of end plate 20 of power supply device 100 in Fig. 1. End plate 20 in these drawings has frame shape 21 in which the periphery protrudes while the outer shape in plan view is a rectangular shape. A rectangular region surrounded by frame shape 21 is used as a pressing surface that covers an end surface of battery stack 10. By forming the box shape in which frame shape 21 is disposed around the pressing surface in this manner, the strength of the pressing surface can be increased. A screw hole or a cutout for connecting to another portion may be disposed near the upper surface of frame shape 21, as necessary. Further, end plate 20 is disposed with pressing regions 25 respectively near end edge in the up-down direction of the pressing surface, and is disposed with bead region 26 between pressing regions 25.

### (Pressing region 25)

Each of upper and lower pressing regions 25 has a flat surface, and presses battery stack 10. Preferably, the widths of upper and lower pressing regions 25 are substantially equal to each other. Pressing regions 25 including bead region 26 is preferably is disposed in line-symmetry in the horizontal direction.

### (Bead region 26)

Meanwhile, bead region 26 is formed in the middle in the vertical direction of the pressing surface, and is bent into a shape protruding toward the back surface of the pressing surface. With this configuration, the strength can be improved by changing a shape in which bead region 26 is disposed in the middle while pressing regions 25 that press battery stack 10 remain on end plate 20, which enables end plate 20 having high strength to be provided at low cost.

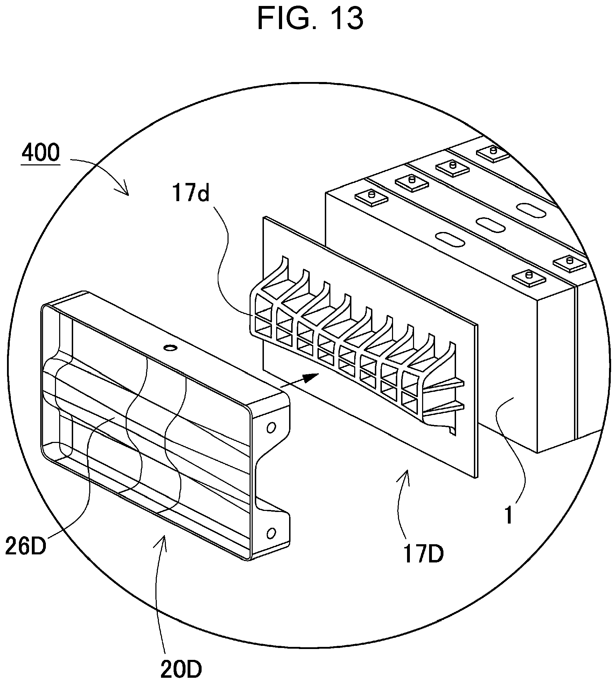

In the case of molding end plate 20 with sheet metal, end plate 20 including bead region 26 has a shape having a space near battery cell 1. Therefore, as in power supply device 400 according to a fourth exemplary embodiment shown in Fig. 13, end surface spacer 17D is preferably disposed between battery cell 1 and end plate 20D. Specifically, as shown in Fig. 13, end surface spacer 17D has protrusion 17d that protrudes toward the recess (the back surface of bead region 26D) of end plate 20D to allow battery cell 1 and end plate 20D to transfer the force therebetween over the entire surface.

### (Side wall 22)

Meanwhile, end plate 20 is disposed with frame shape 21 around the pressing surface. In frame shape 21, both sides of the side surface of the pressing surface are side walls 22. Side wall 22 is disposed with fixing regions 23 for fixing end plate 20 to fastening member 15 respectively at positions corresponding to pressing regions 25 on the vertical end edge. Fixing regions 23 are disposed in the same plane on the upper and lower sides. In addition, each of fixing regions 23 is a flat surface. End plate 20 is fixed to fastening member 15 by fixing regions 23. End plate 20 and fastening member 15 are preferably fixed by welding or caulking. For example, spot welding, clinching, or the like can be used. In addition, screwing using a bolt or the like may be employed.

Side wall 22 is connected to the protruding shape of bead region 26 between these fixing regions 23, that is, at a central portion in the up-down direction. In other words, fixing region 23 connected to fastening member 15 is not provided in the middle of side wall 22 in the height. In this manner, by penetrating bead region 26 so as to cross the pressing surface in the horizontal direction as shown in Fig. 3 and the like, the protruding shape of bead region 26 is maintained and the reinforcing structure of end plate 20 is exhibited. Meanwhile, fixing regions 23 for fixing end plate 20 to fastening member 15 are secured in the upper and lower parts of side wall 22 to establish a fixing structure for fixing end plate 20 to fastening member 15.

The protruding shape of bead region 26 is preferably formed in a curved surface shape as shown in the schematic cross-sectional view in Fig. 5A. As a result, the concentration of stress can be avoided more compared to end plate 20X having a configuration in which bead region 26X is bent in a U shape as shown in Fig. 5B, and the strength of end plate 20 can be improved by dispersing the stress.

Side wall 22 of end plate 20 is preferably disposed continuously with bead region 26 at the center in the vertical direction with a curved surface. As a result, the strength can be secured by making the central portion continuous with the protruding portion of bead region 26 while securing the region where end plate 20 is coupled to fastening member 15 on side wall 22 of end plate 20.

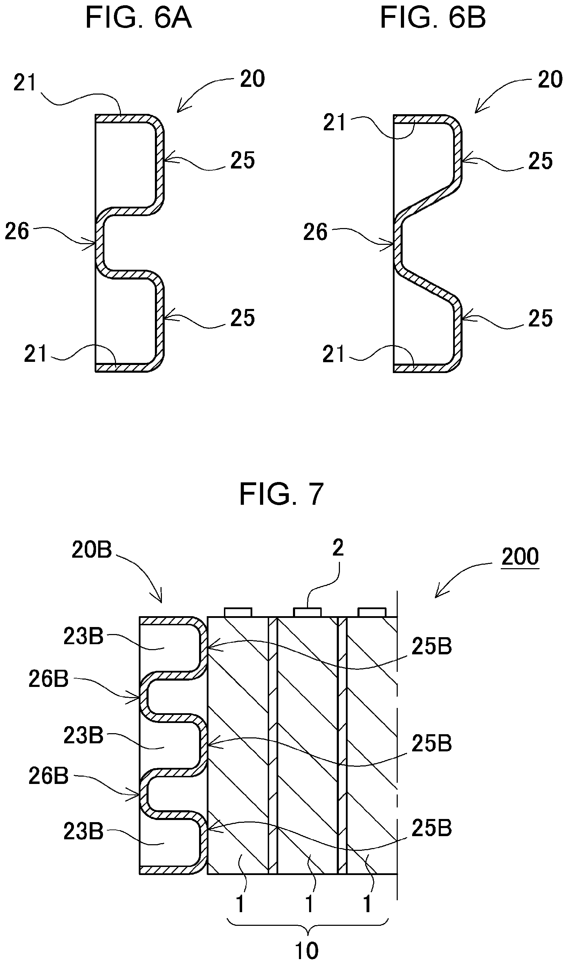

Further, it is preferable that the protruding shape of bead region 26 be shaped to protrude relatively steeply in the central portion in the left and right direction in vertical sectional view as shown in Fig. 6A, but meanwhile, be shaped to gradually incline towards both sides as shown in Fig. 6B. In this way, in the middle of the pressing surface in the left and right direction where the strength becomes relatively weak, the protruding shape is tightened to increase the strength, and the end part of the pressing surface can be deformed to secure fixing region 23 for fixing fastening member 15 to side wall 22 of end plate 20.

In addition, while continuously forming pressing regions 25 and bead region 26 on the pressing surface, end plate 20 is preferably slightly inclined in the protruding direction of side wall 22, that is, in the direction toward the back surface of the pressing surface at the boundary with side wall 22 as shown in Fig. 3. By processing in this way, the stress concentration at the boundary portion between the pressing surface and side wall 22 can also be alleviated, and the risk of breakage of the boundary portion between the pressing surface and side wall 22 can also be reduced.

End plate 20 thus configured can be formed by bending one metal sheet by press working. As a result, the required strength can be maintained only with one sheet and without using two sheets of sheet metal as in the conventional end plate, and further, cost and weight can be reduced. End plate 20 is preferably formed by processing a sheet metal such as stainless steel (SUS) or a high tensile strength steel sheet.

Further, at the time of fixing end plate 20 to fastening members 15, end plate 20 having this configuration does not require the size of the power supply device to be increased in order to avoid interference between a fixing processing facility such as a mechanical clinch and the power supply device as in the conventional case.

Furthermore, end plate 20 is preferably designed such that the sum of the heights of pressing regions 25 formed in the upper and lower parts is substantially equal to the height of bead region 26 formed in the middle in cross-sectional view. For example, in Fig. 4 which is a longitudinal sectional view in the middle in the width direction of end plate 20, when the height of pressing region 25 on the upper side is b 1, the height of bead region 26 is a, and the height of pressing region 25 on the lower side is b2, a = b 1 + b2 is preferably satisfied. By designing in this manner, both the pressing force and the rigidity of end plate 20 can be achieved in a well-balanced manner.

### [Second exemplary embodiment]

In the first exemplary embodiment described above, an example in which one bead region 26 is provided in the center of end plate 20 in the vertical direction has been described, but the number of bead regions is not limited to one in the present invention, and a plurality of bead regions may be provided. As an example, in power supply device 200 according to a second exemplary embodiment shown in the schematic cross-sectional view in Fig. 7, a configuration in which two bead regions 26B are provided in end plate 20B is shown. By providing the plurality of bead regions 26B in this manner, the strength of end plate 20B can be further increased. In addition, pressing regions 25B are disposed while being separated in three parts, which allows the end surface of battery stack 10 to be pressed more uniformly. Further, also in side wall 22 of end plate 20B, because fixing regions 23B can be provided not only at the upper and lower end edges but also in the middle, the reliability of fixing end plate 20B to fastening member 15 can be improved. Note that in power supply device 200 according to the second exemplary embodiment, the members similar to those described in the above first exemplary embodiment are denoted by the same reference numerals, and detailed description thereof are appropriately omitted.

### [Third exemplary embodiment]

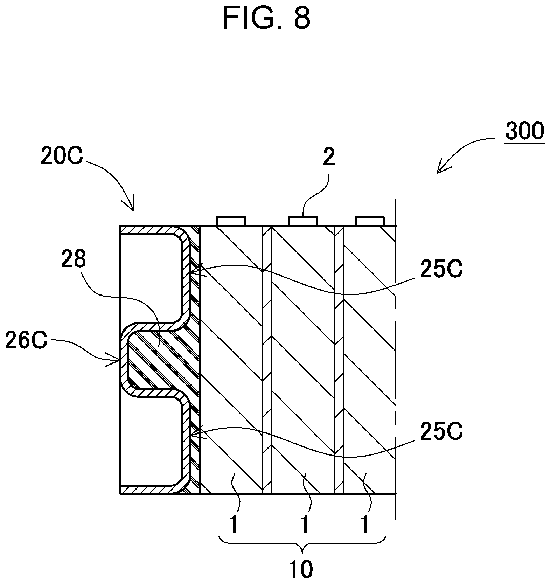

In the above example, the end plate is bent to provide the bead region, and the pressing surface of the end plate is pressed against and fastened to the battery stack. However, the present invention is not limited to the example in which the bead region of the end plate is a cavity, and the bead region may be solid. An example of this is shown as power supply device 300 according to a third exemplary embodiment in a schematic cross-sectional view in Fig. 8. Note that also in power supply device 300 according to the third exemplary embodiment, the members similar to those described in the above first exemplary embodiment are denoted by the same reference numerals, and detailed description thereof are appropriately omitted.

End plate 20C shown in Fig. 8 includes the pressing surface that is not hollow but solid. For example, bead region 26 of end plate 20C is filled with insulating member 28 such as resin or rubber. Insulating member 28 may be configured to cover not only bead region 26C but also pressing region 25C. In this way, the pressing surface that presses battery stack 10 is made of a uniform material, which allows the end surface of battery stack 10 to be uniformly pressed and the heat to be uniformly dissipated. Further, by filling insulating member 28, as compared with the configuration in Fig. 4 and the like partially including an air layer, the air layer can be eliminated and the heat dissipation property of the end surface of battery stack 10 can be improved. In addition, a thermal coupling state with the end surface of battery stack 10 can be made uniform and heat dissipation performance can be uniformly exerted.

With the above configuration, the end plate can be reduced in cost and weight. In addition, power supply device 100 can be used as a power supply for a vehicle where electric power is supplied to a motor used for causing an electrically-driven vehicle to travel. As an electrically-driven vehicle equipped with power supply device 100, an electrically-driven vehicle such as a hybrid automobile or a plug-in hybrid automobile that travels with both an engine and a motor, or an electric automobile that travels only with a motor can be used, and the power supply device is used as a power supply for these vehicles. Hereinafter, an example is described in which a large-capacity, high-output power supply device in which a large number of power supply devices 100 described above are connected in series or in parallel to obtain electric power for driving an electrically-driven vehicle and a necessary controlling circuit is further added is constructed.

### (Power supply device for hybrid automobile)

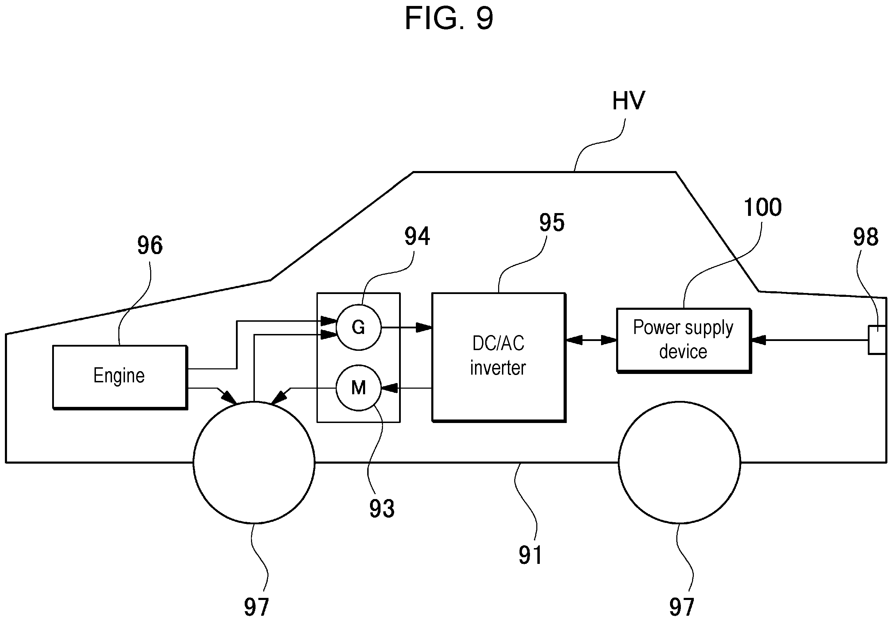

Fig. 9 shows an example in which power supply device 100 is mounted on a hybrid automobile that travels by both an engine and a motor. Vehicle HV on which power supply device 100 shown in this drawing is mounted includes vehicle body 91, engine 96 and drive motor 93 that cause vehicle body 91 to travel, wheels 97 that are driven by engine 96 and drive motor 93, power supply device 100 that supplies electric power to motor 93, and power generator 94 that charges a battery of power supply device 100. Power supply device 100 is connected to motor 93 and power generator 94 via DC/AC inverter 95. Vehicle HV travels using both motor 93 and engine 96 while charging and discharging the battery of power supply device 100. Motor 93 is driven in a region where an engine efficiency is low, for example, during acceleration or low-speed traveling, and causes the vehicle to travel. Motor 93 is driven by electric power supplied from power supply device 100. Power generator 94 is driven by engine 96 or by regenerative braking generated at the time of applying braking to the vehicle, and charges the battery of power supply device 100. As shown in Fig. 9, vehicle HV may include charging plug 98 for charging power supply device 100. By connecting charging plug 98 to an external power supply, power supply device 100 can be charged.

### (Power supply device for electric automobile)

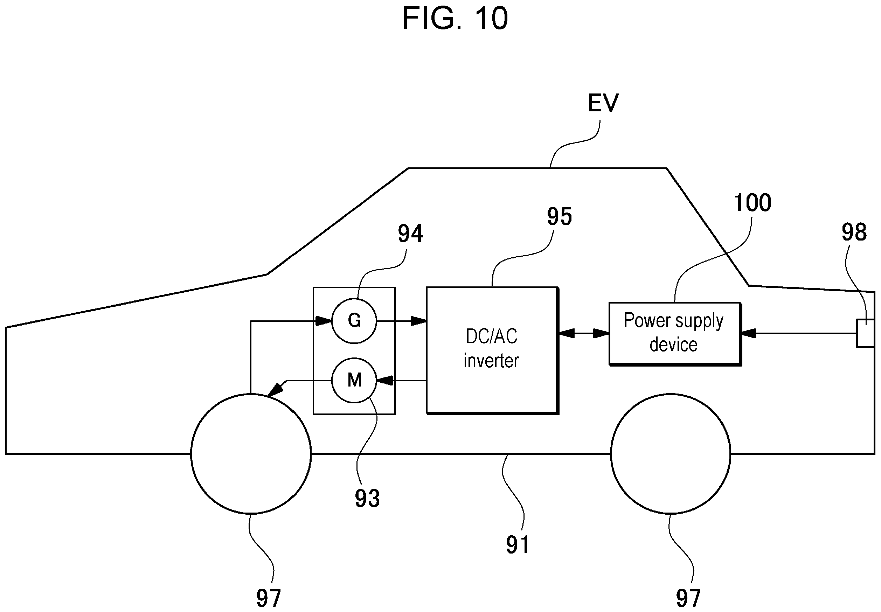

Fig. 10 shows an example in which power supply device 100 is mounted on an electric automobile that travels only by a motor. Vehicle EV on which power supply device 100 shown in this drawing is mounted includes vehicle body 91, drive motor 93 that causes vehicle body 91 to travel, wheels 97 that are driven by motor 93, power supply device 100 that supplies electric power to motor 93, and power generator 94 that charges a battery of power supply device 100. Power supply device 100 is connected to motor 93 and power generator 94 via DC/AC inverter 95. Motor 93 is driven by electric power supplied from power supply device 100. Power generator 94 is driven by the energy at the time of applying regenerative braking to vehicle EV and charges the battery of power supply device 100. Vehicle EV also includes charging plug 98, and power supply device 100 can be charged by connecting charging plug 98 to an external power supply.

### (Power supply device for power storage device)

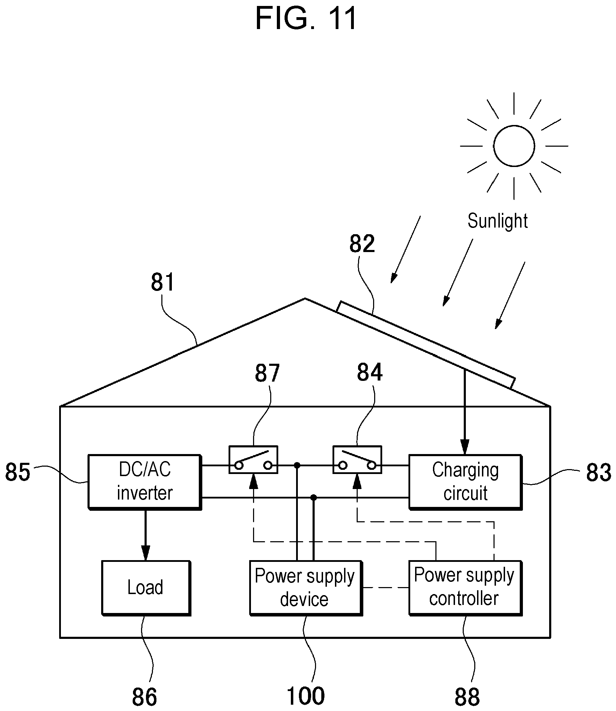

Further, the present invention does not limit the application of the power supply device to a power supply for a motor that causes a vehicle to travel. The power supply device according to the exemplary embodiment can be used also as a power supply for a power storage device that charges a battery with electric power generated by photovoltaic power generation, wind power generation, or the like, and stores electricity. Fig. 11 shows a power storage device that charges a battery of power supply device 100 with solar battery 82 and stores electricity.

The power storage device shown in Fig. 11 charges the battery of power supply device 100 with electric power generated by solar battery 82 arranged on a roof, a rooftop, or the like of building 81 such as a house or a factory. In this power storage device, the battery of power supply device 100 is charged by charging circuit 83 using solar battery 82 as a charging power supply, and thereafter, electric power is supplied to load 86 via DC/AC inverter 85. Thus, this power storage device includes a charge mode and a discharge mode. In the power storage device shown in the drawing, DC/AC inverter 85 is connected to power supply device 100 via discharging switch 87 and charging circuit 83 is connected to power supply device 100 via charging switch 84. Discharging switch 87 and charging switch 84 are turned on and off by power supply controller 88 of the power storage device. In the charge mode, power supply controller 88 turns on charging switch 84 and turns off discharging switch 87 to allow charging from charging circuit 83 to power supply device 100. When charging is completed and the battery is fully charged or when the battery is in a state where a capacity of a predetermined value or more is charged, power supply controller 88 turns off charging switch 84 and turns on discharging switch 87 to switch the mode to the discharge mode and allows discharging from power supply device 100 to load 86. When necessary, the power supply controller can turn on charging switch 84 and turn on discharging switch 87 to supply electricity to load 86 and charge power supply device 100 simultaneously.

Further, although not shown, the power supply device can be used as a power supply for a power storage device that stores electricity by charging a battery using midnight electric power at nighttime. The power supply device that is to be charged with midnight electric power is charged with midnight electric power that is surplus electric power generated by a power station, and outputs the electric power during the daytime when an electric power load increases. This can limit peak electric power during the daytime to a small value. The power supply device can also be used as a power supply charged with both output of a solar battery and midnight electric power. This power supply device can effectively utilize both electric power generated by the solar battery and the midnight electric power, and can efficiently store power in consideration of weather and power consumption.

The power storage system as described above can be suitably used in applications such as a backup power supply device that can be installed in a computer server rack, a backup power supply device for radio base stations for cellular phones and the like, a power storage device combined with a solar battery such as a power storage power supply for homes and factories or a power supply for street lights, and a backup power supply for traffic lights and traffic indicators on roads.

### INDUSTRIAL APPLICABILITY

The power supply device according to the present invention, a vehicle including the same, and the power storage device can be suitably used as a power supply for a large current, which is used for a power supply of a motor for driving an electrically-driven vehicle such as a hybrid automobile, a fuel cell automobile, an electric automobile, or an electric motorcycle. Examples of the power supply device include a power supply device for a plug-in hybrid electric automobile and a hybrid electric automobile that can switch between an EV traveling mode and an HEV traveling mode, an electric automobile, or the like. The power supply device can also be appropriately used for the applications including a backup power supply device that can be mounted on a computer sever rack, a backup power supply device for radio base stations of cellular phones and the like, a power storage device combined with a solar battery such as a power storage power supply for homes and factories or a power supply for street lights, and a backup power supply for traffic lights.

### REFERENCE MARKS IN THE DRAWINGS

100, 200, 300, 400, 900: power supply device
1: battery cell
1X: terminal surface
1 a: outer covering can
1b: sealing plate
1c: gas discharge valve
2: electrode terminal
10: battery stack
15: fastening member
15a: fastening main surface
15d: bent piece
15f: bolt
16: insulating spacer
17, 17D: end surface spacer
17d: protrusion
20, 20B, 20C, 20D, 20X: end plate
21: frame shape
22: side wall
23, 23B: fixing region
25, 25B, 25C: pressing region
26, 26B, 26C, 26D, 26X: bead region
28: insulating member
30: insulating sheet
31: flat plate
32: bent cover
40: bus bar
81: building
82: solar battery
83: charging circuit
84: charging switch
85: DC/AC inverter
86: load
87: discharging switch
88: power supply controller
91: vehicle body
93: motor
94: power generator
95: DC/AC inverter
96: engine
97: wheel
98: charging plug
901: battery cell
902: electrode terminal
903: end plate
904: bind bar
910: battery stack
940: bus bar
HV, EV: vehicle

## Claims

1. A power supply device comprising:
a battery stack including battery cells of a prismatic shape stacked;
an end plate of a rectangular shape in plan view, the end plate including a pressing surface covering an end surface of the battery stack; and
a fastening member that fastens the battery stack,
wherein the end plate includes, on the pressing surface,
pressing regions of a flat shape respectively disposed near end edges in a vertical direction, and
a bead region disposed on a middle in the vertical direction and bent into a shape protruding toward a back surface of the pressing surface.

2. The power supply device according to Claim 1, wherein
the end plate includes side walls respectively on both side surfaces of the pressing surface, and
the side walls each include fixing regions configured to be fixed with the fastening member and respectively disposed at positions corresponding to the pressing regions near end edge in the vertical direction, the side wall being connected to a protruding shape of the bead region at a central part in the vertical direction.

3. The power supply device according to Claim 1 or 2, wherein in the end plate, the protruding shape of the bead region is a curved shape.

4. The power supply device according to Claim 3, wherein each of the side walls of the end plate is continuous in a curved surface at a central part with the bead region.

5. The power supply device according to Claim 4, wherein in the end plate, the protruding shape of the bead region is protruded steeply at left and right central parts in vertical sectional view and is inclined gently toward both sides.

6. The power supply device according to any one of Claims 1 to 5, wherein the end plate is one metal sheet bent by press working.

7. The power supply device according to any one of Claims 1 to 6, wherein in cross-sectional view, the end plate includes the pressing regions respectively disposed in upper and lower parts of the end plate and whose heights sum up to a height of the bead region disposed in a middle.

8. The power supply device according to any one of Claims 1 to 7, wherein the end plate is fixed to the fastening member by welding or caulking.

9. A vehicle comprising the power supply device according to any one of Claims 1 to 8, the vehicle comprising:
the power supply device;
a motor for driving supplied with electric power from the power supply device;
a vehicle body mounted with the power supply device and the motor; and
wheels that are driven by the motor to cause the vehicle body travel.

10. A power storage device comprising:
the power supply device according to any one of Claims 1 to 9; and
a power supply controller that controls charging and discharging of the power supply device,
wherein the power supply controller enables charging of the battery cells with electric power from outside and controls charging to be performed on the battery cells.
